# FASCICULE DE BREVET EUROPEEN

(11) **EP 2 426 036 B1**
(45) Date de publication et mention de la délivrance du brevet: **24.09.2014**
(21) Numéro de dépôt: 11370009.0
(22) Date de dépôt: 31.08.2011
(51) Int. Cl.: B62D 33/063, B62D 1/183, B62D 33/073, B60J 7/16

(54) **Véhicule automobile pour la surveillance des lieux, des objets ou des personnes**
Kraftfahrzeug für die Überwachung von Gelände, Gegenstände oder Menschen
Vehicle automobile for surveillance of premises, objects or persons

(30) Priorité: 01.09.2010 FR 1003499
(43) Date de publication de la demande: 07.03.2012
(73) Titulaire: MECAJET, 59191 Ligny-en-Cambrésis (FR)
(72) Inventeur: Jette, François-Xavier, 59191 Ligny en Combresis (FR)
(74) Mandataire: Boubal, Denis Henri Jacques

(56) Documents cités:
- EP-A1- 0 641 708
- EP-A1- 1 779 717
- EP-A2- 0 826 578
- EP-A2- 2 219 006
- DE-U1-202004 007 609
- FR-A1- 2 181 565
- JP-A- 56 021 977
- US-A- 2 822 214

## Description

L'invention concerne un véhicule automobile et trouve une application particulière dans le domaine de la sécurité pour la surveillance des lieux, des objets ou des personnes.

Afin de surveiller les lieux, tels que par exemple les aéroports, parcs d'exposition, manifestations publiques et privées, plages, ou similaires, le personnel de sécurité utilise, bien souvent, pour se déplacer, des véhicules à position de conduite élevée tels que des véhicules tels que 4X4. Ce type de véhicule à poste de conduite élevé permet d'améliorer quelque peu le champ de vision en comparaison à des véhicules classiques pour lesquels le conducteur est à un niveau inférieur.

Pour ces mêmes motivations, il est également connu de se déplacer à cheval, permettant un champ de vision très large. Si la surveillance à cheval semble une solution adaptée du point de vue de la qualité du champ de vision, elle n'est pas sans inconvénient, par exemple, en raison des soins importants que requièrent ces animaux, de leur disponibilité, ou encore sur le plan climatique.

Aussi, il existe dans le domaine de la sécurité un besoin important pour des solutions adaptées pour se déplacer lors des opérations de surveillance.

On connait par ailleurs du document EP 0 826 578 A2, qui montre le préambule de la revendication 1, un dispositif pour déplacer une cabine de tracteur par rapport au châssis de tracteur, ainsi qu'un tracteur équipé d'un tel dispositif. Le domaine de ce document est celui des véhicules de chantier, en particulier des pelleteuses. Le dispositif décrit dans ce document permet de lever la cabine par rapport au châssis et a pour objet de faciliter, pour l'opérateur, les opérations de chargement. La position haute de la cabine permet à l'opérateur une meilleure position de vue à l'intérieur des bennes de camion.

On connait également du document US 2.822.214 un véhicule automobile dont l'accès à la cabine est permis par une porte avant. La colonne de direction est articulée à la porte, d'une part, et au châssis de la cabine par l'intermédiaire d'un cardan. Lors de l'ouverture de la porte le volant de direction s'escamote, facilitant le passage de l'utilisateur.

Le but de la présente invention est de proposer un véhicule particulièrement adapté pour la surveillance qui permet non seulement de voir et d'être vu lorsque nécessaire, mais également de se déplacer de manière discrète si besoin est.

Un autre but de la présente invention est de proposer un véhicule utilisable quelles que soient les conditions météorologiques.

Un autre but de l'invention est de proposer un véhicule qui permette de sortir rapidement du véhicule si besoin est.

D'autres buts et avantages de l'invention apparaîtront au cours de la description qui va suivre qui n'est donnée qu'à titre indicatif et qui n'a pas pour but de la limiter.

Aussi, l'invention concerne un véhicule comprenant :
- un châssis équipé au moins d'un essieu avant et d'un essieu arrière, l'un au moins desdits essieux, avant et/ou arrière, étant un essieu directionnel, l'un au moins des essieux, avant ou arrière, étant un essieu motorisé,
- des moyens moteurs pour le déplacement dudit véhicule,
- des moyens de freinage dudit véhicule,
- une cabine de pilotage dont l'habitacle reçoit un poste de pilotage, ainsi que des moyens de commande agencés par rapport audit poste de pilotage, lesdits moyens de commande comprenant au moins :
- une commande de direction, telle qu'un volant de direction, pour le contrôle dudit au moins un essieu directionnel,
- une commande de frein, telle qu'une pédale de frein, pour le contrôle des moyens de freinage,
- une commande d'accélérateur, telle qu'une pédale d'accélérateur, pour le contrôle desdits moyens moteurs.
et dans lequel le véhicule comprend des moyens d'élévation pour lever ladite cabine de pilotage par rapport audit châssis.

Selon l'invention le véhicule est équipé d'un capteur de présence pour détecter une présence entre ladite cabine de pilotage et ledit châssis, ledit capteur de présence comprenant un palpeur constitué par la sous-face de la cabine de pilotage reliée au châssis de cabine par l'intermédiaire de biellettes, et dans lequel ladite sous-face prend sous l'effet de la gravité et/ou d'une poussée mécanique une position écartée distante du châssis de cabine, ladite sous-face étant apte à remonter vers une position rapprochée lors de la rencontre d'un obstacle, un contacteur permettant de détecter le changement de position.

Selon des caractéristiques optionnelles prises seules ou en combinaison :
- la cabine de pilotage comprend un châssis de cabine et une verrière ouvrable articulée audit châssis de cabine, apte à passer d'une position de fermeture de ladite cabine de pilotage à une position d'ouverture de ladite cabine de pilotage, ladite commande de direction étant solidaire de ladite verrière ouvrable de telle façon à s'escamoter conjointement avec ladite verrière ouvrable en position d'ouverture de ladite cabine de pilotage;
- la commande de direction comprend un volant de direction solidaire d'une colonne de direction couplée à un orbitrol, la colonne de direction traversant un bloc supportant un capteur destiné à cibler la rotation de la colonne de direction, ainsi qu'un dispositif antivol apte à bloquer la rotation de la colonne de direction ;
- le châssis présente une carrosserie, lesdits moyens d'élévation pour lever ladite cabine de pilotage par rapport au châssis permettant de lever ladite cabine de pilotage d'une position basse, pour laquelle ladite cabine de pilotage est intégrée à ladite carrosserie du châssis, prolongeant ladite carrosserie du châssis, vers une position haute, pour laquelle ladite cabine de pilotage est à distance du châssis ;
- les moyens d'élévation comprennent, d'une part, un support articulé reliant la cabine de pilotage audit châssis et, d'autre part, un actionneur, tel qu'un vérin coopérant avec ledit support articulé pour lever ou baisser ladite cabine de pilotage ;
- le support articulé forme un parallélogramme déformable dont les quatre sommets sont constitués par quatre axes de pivot, parallèles entre eux, deux sommets dudit parallélogramme déformable étant solidaires dudit châssis, les deux autres sommets dudit parallélogramme déformable étant solidaires de la cabine de pilotage ;
- les moyens d'élévation permettent de lever ladite cabine de pilotage par rapport au châssis d'une course verticale comprise entre 1 et 2 m, telle que par exemple 1,6 m ;
- les moyens d'élévation comprennent une commande accessible dans le volume habitable de ladite cabine de pilotage permettant à un opérateur humain d'actionner ladite cabine de pilotage à la montée ou à la descente.

Selon un mode de réalisation, les moyens d'élévation comprennent des moyens électroniques autorisant l'élévation de ladite cabine de pilotage si et seulement si une ou plusieurs conditions déterminées sont remplies.

Par exemple, la ou les conditions déterminées sont tout ou partie des conditions suivantes :
- le poste de pilotage étant équipé d'une ceinture de sécurité, ladite ceinture est bouclée,
- la cabine de pilotage étant équipée d'une verrière ouvrable, ladite verrière est en position fermée,
- le véhicule étant équipé d'une clef de contact, le contact est mis,
- le véhicule étant équipé d'un capteur de devers, le devers n'est pas supérieur à une valeur déterminée,
- le véhicule étant équipé d'un capteur de poids, le poids en charge de la cabine de pilotage n'excède pas une valeur déterminée.

Selon un mode de réalisation, les moyens d'élévation comprennent des moyens électroniques autorisant la descente de la cabine de pilotage si et seulement si une ou plusieurs conditions déterminées sont remplies.

Par exemple, la ou lesdites conditions déterminées sont tout ou partie des conditions suivantes :
- le poste de pilotage étant équipé d'une ouverture de sécurité, ladite ceinture est bouclée,
- la cabine de pilotage étant équipée d'une verrière ouvrable, ladite verrière est en position fermée,
- le véhicule étant équipé d'une clef de contact, le contact est mis,
- le véhicule étant équipé d'un capteur de présence agencé pour détecter une présence entre ladite cabine de pilotage et ledit châssis lorsque ladite cabine de pilotage est en position haute, ledit capteur de présence ne détecte aucune présence.

Selon un mode de réalisation, le véhicule peut être équipé d'un capteur de présence pour détecter une présence entre ladite cabine de pilotage et ledit châssis lorsque ladite cabine de pilotage est en position haute, ledit capteur de présence comprenant un palpeur à câble.

L'invention sera mieux comprise à la lecture de la description suivante accompagnée des dessins en annexe parmi lesquels :
- la figure 1 est une vue d'un véhicule conforme à l'invention selon un mode de réalisation, la cabine de pilotage en position basse,
- la figure 2 est une vue du véhicule, la cabine de pilotage dans une position intermédiaire entre la position basse et une position haute de ladite cabine,
- la figure 3 est une vue du véhicule de la figure 1, ladite cabine de pilotage en position haute,
- la figure 4 est une vue du support articulé et de l'actionneur, les moyens d'élévation du véhicule tels qu'illustrés à la figure 1 lorsque la cabine est en position basse,
- la figure 5 est une vue du support articulé et de l'actionneur telle qu'illustrée à la figure 4 lorsque la cabine de pilotage est en position haute,
- la figure 6 est une vue de détail de côté du support articulé et de l'actionneur telle qu'illustrée à la figure 4, dans une position intermédiaire,
- la figure 7 est une vue de face du support articulé et de l'actionneur telle qu'illustrée à la figure 6,
- la figure 8 est une vue de côté de la cabine de pilotage du véhicule tel qu'illustré à la figure 1, selon un mode de réalisation en position d'ouverture de la verrière,

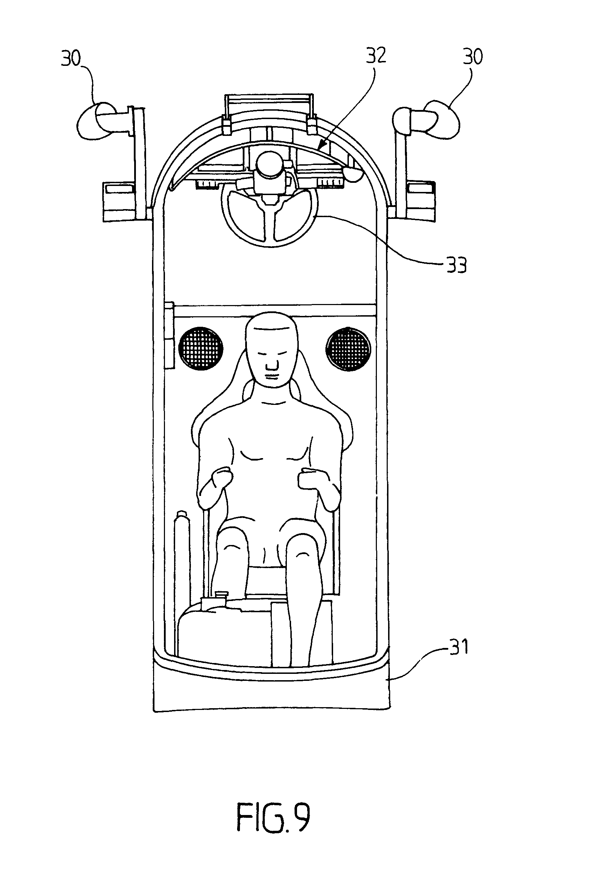

- la figure 9 est une vue de face de la cabine de pilotage telle qu'illustrée à la figure 8,
- la figure 10 est une vue partielle d'un capteur de présence selon un mode de réalisation de l'invention,
- la figure 11 est une vue du capteur de présence lorsque le palpeur rencontre un obstacle,
- la figure 12 est une vue du capteur de présence lorsque le palpeur ne rencontre pas d'obstacle,
- la figure 13 est une vue de détail du cadre XI tel qu'illustré à la figure 11,
- la figure 14 est une vue de détail du cadre XII tel qu'illustré à la figure 12,
- la figure 15 est une vue de face d'un mécanisme de fermeture de la verrière selon un mode de réalisation de l'invention,
- les figures 16, 17 et 18 sont respectivement des vues de côté, de dessus et en perspective du mécanisme de fermeture tel qu'illustré à la figure 15,
- la figure 19 est une vue partielle de la commande de direction comprenant une colonne de direction couplée à un orbitrol.

Aussi, l'invention concerne un véhicule automobile 1 comprenant :
- un châssis 2 équipé au moins d'un essieu avant 21 et d'un essieu arrière 22, l'un au moins desdits essieux, avant ou arrière, étant un essieu directionnel, tel que par exemple l'essieu avant 21 ou l'essieu arrière 22, l'un au moins des essieux, avant et/ou arrière, étant un essieu motorisé,
- des moyens moteurs pour le déplacement du véhicule,
- des moyens de freinage du véhicule,
- une cabine de pilotage 3 dont l'habitacle reçoit un poste de pilotage, ainsi que des moyens de commande agencés par rapport audit poste de pilotage, les moyens de commande comprenant au moins :
   - une commande de direction, telle qu'un volant de direction, pour le contrôle dudit au moins un essieu directionnel,
   - une commande de frein, telle qu'une pédale de frein, pour le contrôle des moyens de freinage,
   - une commande d'accélérateur, telle qu'une pédale d'accélérateur pour le contrôle desdits moyens moteurs.

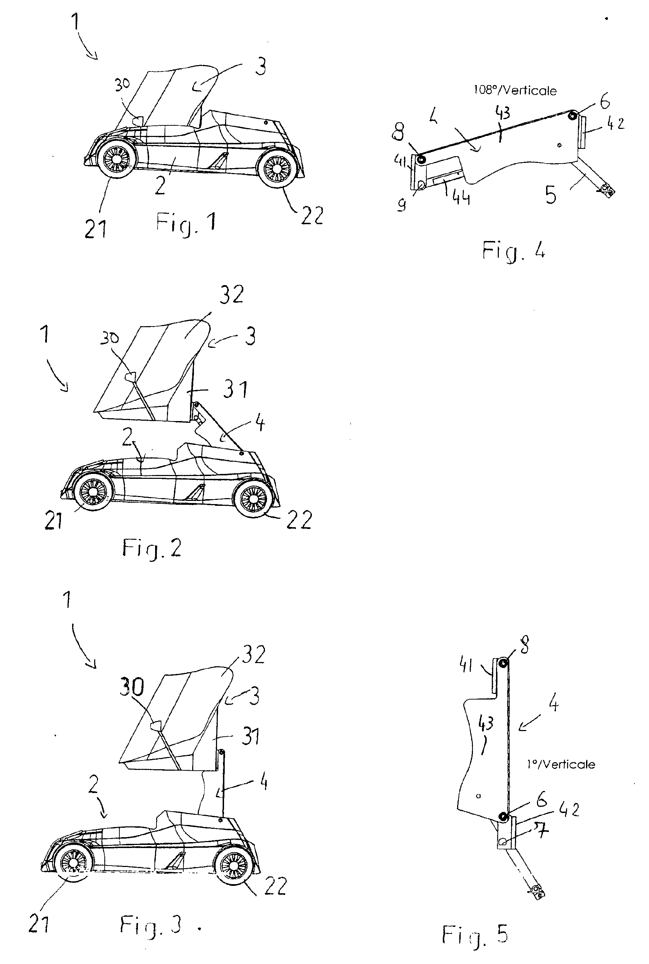

Selon l'invention, le véhicule comprend des moyens d'élévation 4, 5 pour lever ladite cabine de pilotage 3 par rapport au châssis 2. Ces moyens d'élévation 4, 5 permettent ainsi de faire passer la cabine d'une position basse telle qu'illustrée à la figure 1, vers une position haute de la cabine telle qu'illustrée à la figure 3.

Le véhicule permet ainsi de changer de forme permettant de passer d'un aspect discret tel qu'illustré à la figure 1, vers un aspect voyant tel qu'illustré à la figure 2.

Quelle que soit la position de la cabine de pilotage haute ou basse, les moyens de commande associés au poste de pilotage permettent le contrôle du déplacement du véhicule (accélération, freinage, direction).

La cabine du véhicule 3 conforme à l'invention est constituée essentiellement d'un châssis de cabine 31, d'un habitacle et d'une verrière 32. La cabine de pilotage 3, conforme à l'invention permet de protéger le pilote quelles que soient les conditions météorologiques (pluie, vent...).

La cabine 3, notamment, le châssis de cabine peut être équipé de rétroviseurs latéraux 30, extérieurs grand angle. Ils peuvent être munis de deux ou trois facettes afin de pouvoir assurer une vision vers l'arrière proche (vers le bas), à 8-10 m, et au loin.

L'habitacle de la cabine de pilotage 3 est l'espace de contrôle de véhicule. L'habitacle est équipé desdits moyens de commande précités (direction, freinage, accélération), voire d'éléments de confort, d'éléments de sécurité, d'éléments de surveillance, voire d'un tableau de bord.

La verrière peut être en polycarbonate ou en verre, tous deux potentiellement à l'épreuve des balles

Les moyens de commande peuvent présenter outre la commande de direction, la commande de frein et la commande d'accélérateur, des commandes d'accessoires tels que commande de klaxon, d'essuie-glaces, de pulvérisateur lave glace, de chauffage et ventilation de la cabine, de feux avant, de frein parking, de clignotant, de gyrophare.

En outre, les moyens de commande peuvent présenter une commande accessible dans le volume habitable de ladite cabine de pilotage permettant à un opérateur d'actionner ladite cabine de pilotage à la montée ou à la descente.

Ledit tableau de bord, éventuel, peut présenter tout ou partie des éléments suivants tachymètre, écran pour caméra de recul, indicateur de surcharge de la cabine, voire indicateur de niveau de batterie dans le cas où le véhicule est un véhicule électrique.

Le véhicule peut être muni de caméras de surveillance, qui peuvent être en relation avec un poste de commandement extérieur.

De préférence, le poste de pilotage comprend un siège permettant à un utilisateur de piloter le véhicule en position assise. Le poste de pilotage peut en outre présenter des éléments de confort, tels qu'accoudoirs, éclairage intérieur de la cabine, autoradio.

En outre, l'habitacle peut présenter des éléments de sécurité, tels qu'une ceinture de sécurité à enrouleur, comprenant notamment un détecteur de ceinture bouclée.

Selon le mode de réalisation illustré, la cabine de pilotage 3 comprend le châssis de cabine 31 et la verrière 32, ouvrable articulée audit châssis de cabine 31.

La verrière ouvrable 32 est apte à passer d'une position de fermeture de ladite cabine 3 vers une position d'ouverture de ladite cabine 3, permettant au conducteur de rentrer ou de sortir de la cabine de pilotage 3.

Avantageusement, selon un mode de réalisation ladite commande de direction 33 est solidaire de ladite verrière ouvrable 32 de telle façon à s'escamoter conjointement avec ladite verrière ouvrable 32 en position d'ouverture de ladite cabine 3. Le cas échéant le tableau de bord est également solidaire de ladite verrière ouvrable 32.

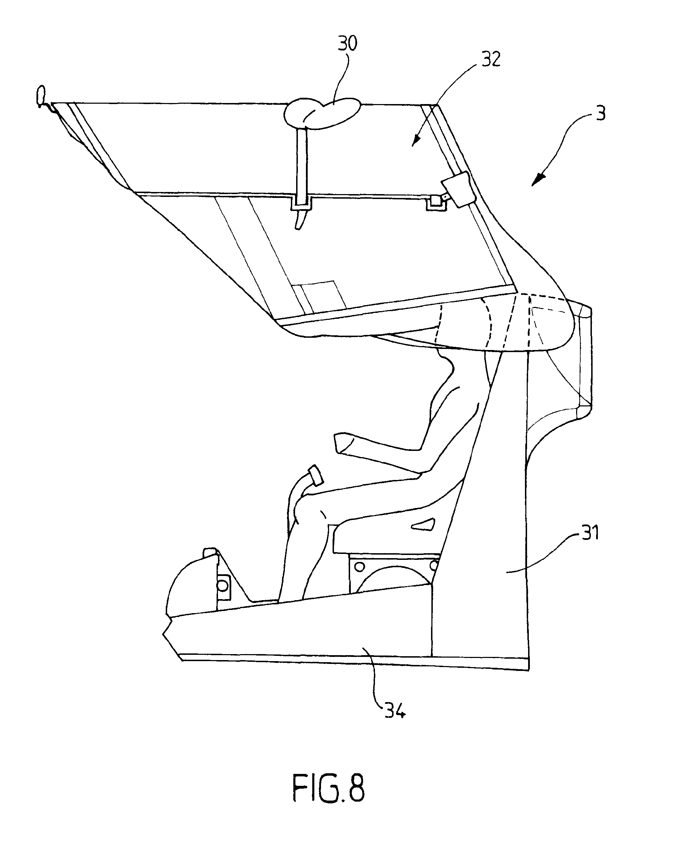

En position d'ouverture de la cabine de pilotage 3 telle qu'illustrée à la figure 8 aucun obstacle ne vient alors gêner le conducteur pour entrer ou sortir de ladite cabine de pilotage 3, facilitant ainsi l'accès à la cabine.

Selon le mode de réalisation illustré le conducteur du véhicule peut entrer ou sortir de la cabine par l'avant ou par les côtés.

Selon un mode de réalisation notamment illustré aux figures, le châssis 2 présente une carrosserie. Lesdits moyens d'élévation 4, 5 pour lever ladite cabine de pilotage 3 par rapport au châssis 2 permettent de lever ladite cabine de pilotage de ladite position basse, vers la position haute pour laquelle ladite cabine de pilotage est à distance du châssis. Eventuellement, tel qu'illustré à la figure 1 dans ladite position basse de la cabine 3, ladite cabine de pilotage 3 est intégrée au châssis 2, prolongeant ledit châssis 1.

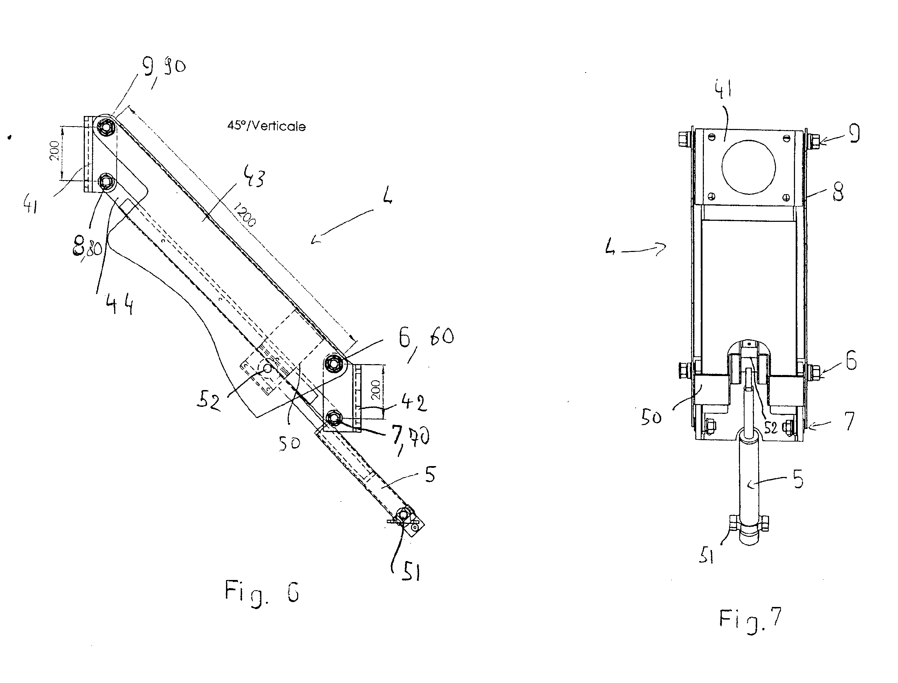

Les moyens d'élévation de la cabine peuvent comprendre d'une part un support articulé 4 reliant ladite cabine de pilotage 3 audit châssis 2 et d'autre part un actionneur 5, tel qu'un vérin, coopérant avec ledit support articulé 4 pour lever ou baisser ladite cabine de pilotage 3. Selon le mode de réalisation illustré notamment aux figures 4 à 7, ledit support articulé 4 forme un parallélogramme déformable dont les quatre sommets 6, 7, 8, 9 sont constitués par quatre axes de pivot dudit support articulé, parallèles entre eux. Deux sommets 6, 7 dudit parallélogramme déformable sont solidaires du châssis 2, les deux autres sommets 8, 9 dudit parallélogramme déformable étant solidaires de la cabine de pilotage 3. Ce support articulé 4 permet ainsi de lever la cabine 3 par rapport au châssis 2 du véhicule sans modifier l'inclinaison de la cabine par rapport au châssis lors de la montée ou la descente de la cabine 3.

Tel qu'illustré aux exemples 6 et 7, le support articulé 4 est composé d'une base 42 destinée à être solidarisée au châssis 2, d'une base 41 destinée à être solidarisée au châssis de la cabine de pilotage 3 ainsi que de deux bras 43, 44 reliant chacun la base 42 à ladite base 41. Le bras 43 est notamment articulé à l'une de ses extrémités 90 à la base 41 et à l'autre de ses extrémités 60 à la base 42. Le bras 44 est notamment articulé à l'une de ses extrémités 80 à la base 41 et l'autre de ses extrémités 70 à la base 42. L'actionneur 5 peut être constitué par un vérin tel que par exemple vérin hydraulique dont l'une des extrémités 52 est assujettie par une liaison rotule au bras 43 par l'intermédiaire d'un support 50 et l'autre extrémité est articulée par une liaison pivot 51 au châssis 2 du véhicule.

Tel qu'illustré à la figure 4, selon un exemple non limitatif de réalisation, dans la position rétractée du vérin (position basse cabine), la direction des bras forme un angle de 108° par rapport à la verticale alors que dans la position déployée du vérin (position haute cabine), la direction des bras 43, 44 forme un angle de 1 ° par rapport à la verticale. Les moyens d'élévation 4, 5 peuvent permettre de lever la cabine de pilotage 3 au châssis 2 d'une course verticale comprise entre 1 et 2 m, tel que par exemple 1,6 m. En position haute la cabine de pilotage 3 peut notamment atteindre une hauteur de 3,5 m par rapport au sol.

Selon un mode de réalisation, les moyens d'élévation peuvent comprendre des moyens électroniques autorisant l'élévation de la cabine de pilotage 3 si et seulement si une ou plusieurs conditions déterminées sont remplies. A cet effet, la ou les conditions déterminées peuvent être tout ou partie des conditions suivantes :
- le poste de pilotage étant équipé d'une ceinture de sécurité, ladite ceinture est bouclée,
- la cabine de pilotage 3 étant équipée d'une verrière 32 ouvrable, ladite verrière est en position fermée,
- le véhicule étant équipé d'une clef de contact, le contact est mis,
- le véhicule étant équipé d'un capteur de devers, le devers n'est pas supérieur à une valeur déterminée,
- le véhicule étant équipé d'un capteur de poids, le poids en charge de la cabine de pilotage n'excède pas une valeur déterminée.

De même, les moyens d'élévation peuvent comprendre des moyens électroniques autorisant la descente de la cabine de pilotage si et seulement si une ou plusieurs conditions déterminées sont remplies. La ou les conditions déterminées peuvent être tout ou partie des conditions suivantes :
- le poste de pilotage étant équipé d'une ceinture de sécurité, ladite ceinture est bouclée,
- la cabine de pilotage étant équipée d'une verrière ouvrable, ladite verrière est en position fermée,
- le véhicule étant équipé d'une clef de contact, le contact est mis,
- le véhicule étant équipé d'un capteur de présence agencé pour détecter une présence entre ladite cabine de pilotage et ledit châssis lorsque ladite cabine de pilotage est en position haute, ledit capteur de présence ne détecte aucune présence.

Un mécanisme de fermeture 60 de la verrière ouvrable 32 peut intégrer un contacteur 61 du type à relâchement qui permet de détecter si la verrière 32 est bien en position de fermeture.

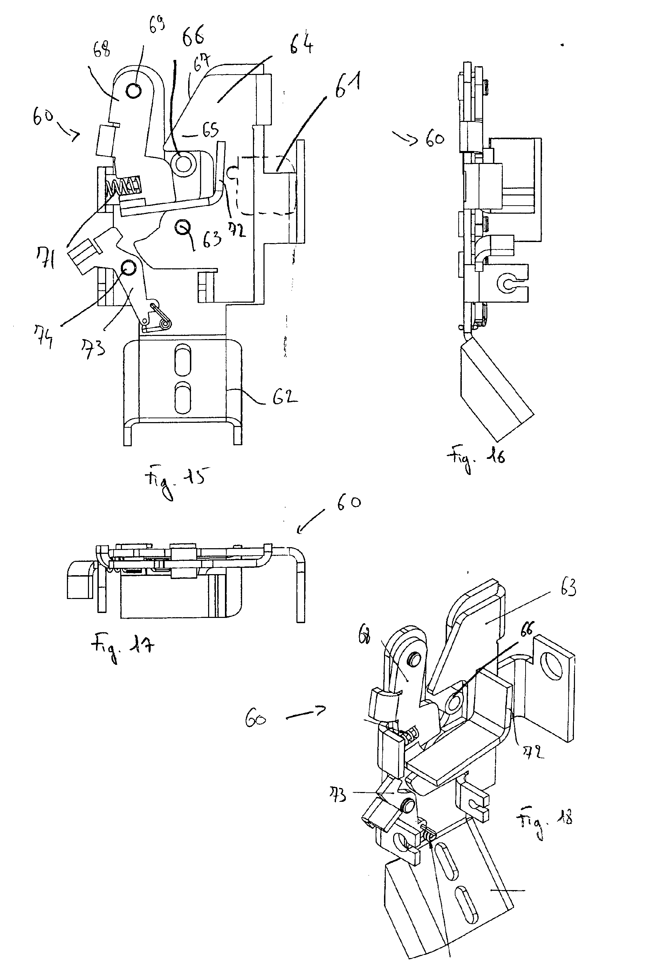

Ce mécanisme est illustré en détail des figures 15 à 18 et comprend une pièce de base 62 fixée au châssis de cabine 31 sur lequel une pièce de fermeture 64 est articulée via un pivot 63.

Cette pièce de fermeture 64 comprend une partie formant un crochet 65, destiné à crocheter un plot 66 solidaire de la verrière ouvrable 32.

Lors de la fermeture de la verrière 32, le plot 66 solidaire de la verrière 32 vient repousser la pièce de fermeture 63 en glissant sur l'arête 67 de la pièce de fermeture 64

En fin de course la pièce de fermeture 64 vient crocheter le plot 65 et interdire ainsi l'ouverture de la verrière 32.

Une pièce 68 est articulée sur la pièce de base 62 notamment via un pivot 69. Cette pièce 68 est contrainte en direction du plot 66 grâce à un ressort 71 et présente une partie 72 destinée à appuyer sur la partie mobile du contacteur 61, lui-même fixé à ladite pièce de base 62.

En fin de course, tel qu'illustré à la figure 15, le plot 66 vient repousser la pièce 68 à l'encontre de la force de rappel du ressort 71. Le contacteur 61 est alors relâché.

Le relâchement du contacteur 61 permet de détecter la fermeture de la verrière 32. Au contraire lorsque le plot 66 n'appuie pas sur la pièce 68, le ressort 71 force la partie 72 de la pièce 68 à appuyer sur le contacteur 61. L'appui sur le contacteur 61 permet de détecter que la verrière 32 est en position d'ouverture.

Eventuellement une pièce de verrouillage 73 est articulée à la pièce de base 62 via un pivot 74. Cette pièce de verrouillage 73 présente deux positions stables pour soit autoriser la libre articulation de la pièce de fermeture 64 (figure 15), soit bloquer la pièce de fermeture 74 dans une position où ladite pièce de fermeture 64 interdit l'ouverture de la verrière 32 (non illustrée).

Eventuellement, une commande de secours manuel peut être disponible pour la descente de la cabine de pilotage. La cabine en cas de panne peut être descendue par un tiers à l'extérieur du véhicule, ou par le conducteur de l'intérieur de la cabine.

L'ensemble de la planche de bord (y compris les accoudoirs) se soulève afin de permettre l'accès au siège conducteur.

Dans le cas où le véhicule est équipé d'un capteur de présence pour détecter une présence entre la cabine de pilotage 3 et ledit châssis lorsque la cabine de pilotage est en position haute, le capteur de présence peut comprendre un palpeur à câble.

Alternativement le capteur peut comprendre un palpeur constitué par la sous-face 34 de la cabine de pilotage Cette sous-face 34 est reliée au châssis de cabine 31 par l'intermédiaire de biellettes 35 notamment au nombre de quatre.

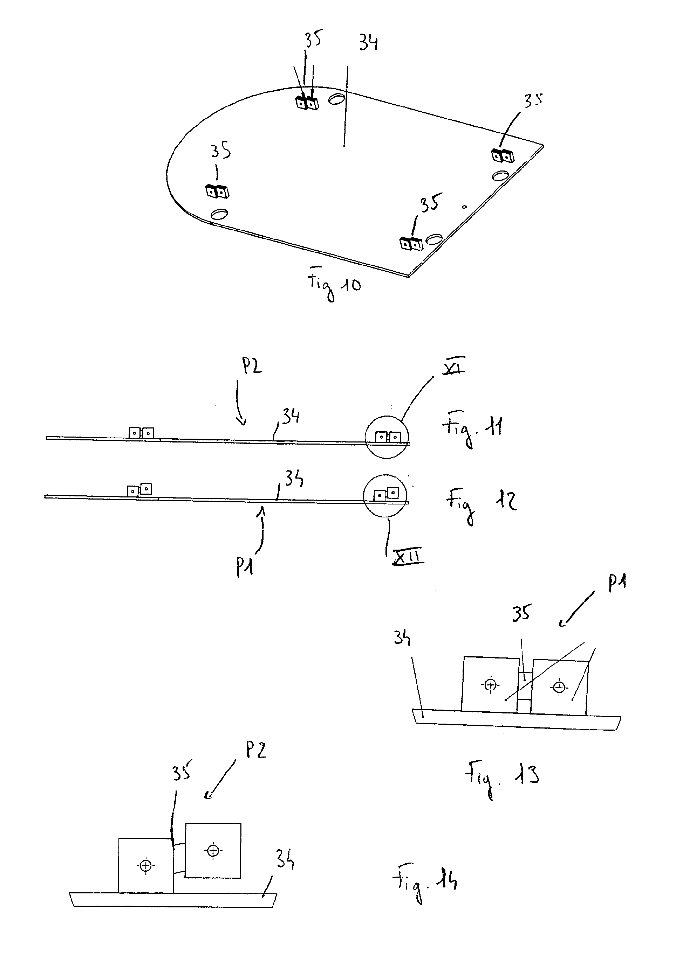

Sous l'effet de la gravité et/ou d'une poussée mécanique (i.e. ressort) la sous-face 34 prend la position P1 telle qu'illustrée à la figure 12 et 14, écartée distante du châssis de cabine 31.

Lorsque la cabine de pilotage rencontre un obstacle la sous-face 34 est forcée à se rapprocher du châssis de cabine 31 en remontant prenant alors la position rapprochée P2 telle qu'illustrée à la figure 12 ou 13. Un contacteur permet de détecter ce changement de position de P1 vers P2.

Selon un mode de réalisation, les moyens moteurs pour le déplacement du véhicule peuvent être électriques.

Le groupe moteur peut être constitué des principaux éléments suivants :
- un onduleur/variateur de vitesse,
- un moteur frein électrique (la sécurité positive),
- un réducteur/différentiel.

L'onduleur/variateur a pour rôle de transformer le courant en continu de la batterie d'alimentation en un courant triphasé et de faire ensuite varier la fréquence du courant en fonction de la vitesse de rotation désirée du moteur. Le moteur est électrique, il s'agit selon un mode de réalisation d'un moteur asynchrone (triphasé) muni d'un frein à sécurité positive.

Le réducteur/différentiel a pour rôle de réduire la vitesse en sortie du pont par rapport à la vitesse de rotation du moteur.

Le différentiel quant à lui a pour rôle d'autoriser les différences de vitesse entre les deux roues d'un même essieu motorisé. Les moyens de freinage peuvent être constitués des principaux éléments suivants des freins à disque pour le freinage de l'essieu avant, des freins à tambour pour le freinage de l'essieu arrière, un faisceau hydraulique, un mètre cylindre et une pédale de frein.

Le châssis peut être un châssis à structure tubulaire carrée et/ou ronde et être conçu afin de supporter les efforts générés par le système d'élévation voire le cas échéant le poids des batteries, des moyens moteurs lorsque ces moyens sont électriques.

Afin d'éviter une prise de roulis trop importante lorsque la cabine de pilotage est en position haute, ce châssis peut être dépourvu de systèmes de suspension.

L'essieu directionnel peut être commandé par un orbitrol 100 (autrement appelé distributeur rotatif), qui distribue l'huile dans les chambres d'un vérin hydraulique à double tige de la direction. L'alimentation hydraulique peut être fournie par un mini groupe hydraulique à moteur électrique.

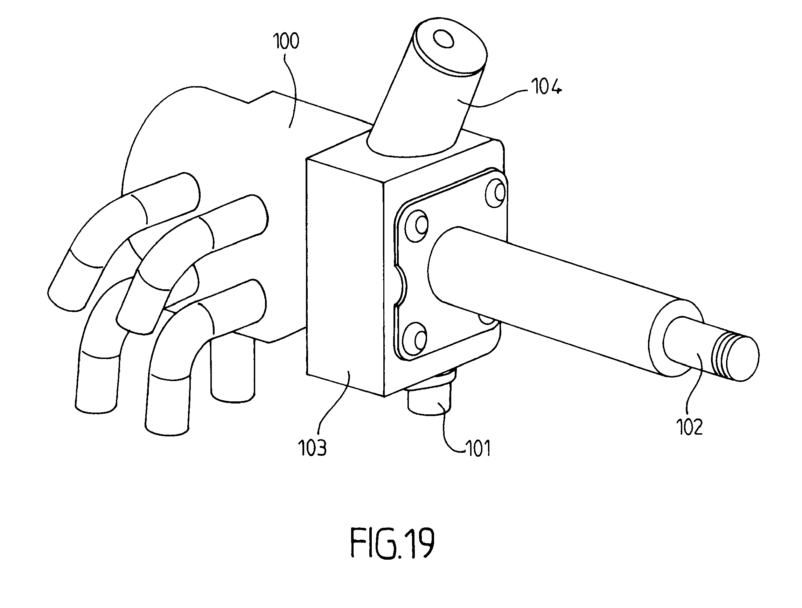

Cet orbitrol 100, illustré à la figure 19, est intégré à la cabine de pilotage et permet de distribuer de l'huile sous pression via des conduites souples jusqu'au vérin hydraulique solidaire du châssis de véhicule. Les conduites souples sont de longueur suffisante pour s'adapter au changement d'élévation entre la cabine de pilotage 3 et le châssis 2 du véhicule.

Avantageusement un capteur de rotation 101 peut permettre de cibler la rotation de la colonne de direction 102 et sera utilisé pour conditionner le fonctionnement du mini groupe hydraulique Le mini groupe hydraulique ne sera, selon ce mode de réalisation, actionné seulement si le capteur 101 détecte une rotation de la colonne de direction 102 et ne sera éteint qu'après expiration d'une temporisation. Cette disposition permet de ne pas alimenter le groupe hydraulique en permanence et ainsi de limiter la consommation électrique

Avantageusement, selon le mode de réalisation illustré à la figure 19, le colonne de direction 102 traverse un bloc support 103 jusqu'à l'orbitrol 100.

Ce bloc 103 supporte non seulement ledit capteur de rotation 101 mais également un dispositif antivol 104 apte à bloquer la colonne de direction 102, connu par l'homme du métier sous l'appellation « Neiman »

La carrosserie du châssis peut comprendre des éléments de signalisation et d'éclairage, tels que phares, par exemple à LED, feux, catadioptres, clignotants, voire stroboscope.

Les essieux du véhicule comprennent des roues qui comprennent chacune une jante et un pneu qui peut être un pneu de série automobile. Le véhicule peut présenter une vitesse maximale de 50 km/h avec la cabine en position basse ou levée.

Ce véhicule trouvera une application particulière comme véhicule de surveillance en particulier pour la surveillance de parkings de grandes surfaces, de centres commerciaux, aéroports, parcs d'exposition, manifestations publiques et privées, plages, ou similaires.

Naturellement, d'autres buts ou avantages de l'invention auraient pu être envisagés sans pour autant sortir du cadre de l'invention définie par les revendications ci-après. A cet égard, il est à noter que la carrosserie peut être souple, constituée par un textile malléable à base néoprène ou élasthanne, et plus généralement par un élastomère.

## Revendications

1. Véhicule (1) comprenant :
- un châssis (2) équipé au moins d'un essieu avant et d'un essieu arrière, l'un au moins desdits essieux, avant ou arrière, étant un essieu directionnel, l'un au moins desdits essieux, avant et/ou arrière, étant un essieu motorisé,
- des moyens moteurs pour le déplacement dudit véhicule,
- des moyens de freinage pour freiner ledit véhicule,
- une cabine de pilotage (3) dont l'habitacle reçoit un poste de pilotage, ainsi que des moyens de commande, agencés par rapport audit poste de pilotage, lesdits moyens de commande comprenant au moins :
- une commande de direction (33), telle qu'un volant de direction, pour le contrôle dudit au moins un essieu directionnel,
- une commande de frein, telle qu'une pédale de frein, pour le contrôle des moyens de freinage,
- une commande d'accélérateur, telle qu'une pédale d'accélérateur, pour le contrôle desdits moyens moteurs,
- des moyens d'élévation (4, 5) pour lever ladite cabine de pilotage (3) par rapport audit châssis (2),
**caractérisé en ce qu'**il est équipé d'un capteur de présence pour détecter une présence entre ladite cabine de pilotage (3) et ledit châssis (2), et **en ce que** ledit capteur de présence comprend un palpeur constitué par la sous-face (34) de la cabine de pilotage reliée au châssis de cabine (31) par l'intermédiaire de biellettes (35), et dans lequel ladite sous-face (34) prend sous l'effet de la gravité et/ou d'une poussée mécanique une position P1 écartée distante du châssis de cabine (31), ladite sous-face (34) étant apte à remonter vers une position rapprochée P2 lors de la rencontre d'un obstacle, un contacteur permettant de détecter le changement de position de ladite sous-face (34).

2. Véhicule selon la revendication 1 dans lequel la cabine de pilotage,(3) comprend un châssis de cabine (31) et une verrière ouvrable (32) articulée audit châssis de la cabine (31), apte à passer d'une position de fermeture de ladite cabine de pilotage (3) à une position d'ouverture de ladite cabine de pilotage (3), ladite commande de direction (33) étant solidaire de ladite verrière ouvrable (32) de telle façon à s'escamoter conjointement avec ladite verrière ouvrable (32) en position d'ouverture de ladite cabine (3).

3. Véhicule selon la revendication 2, dans lequel l'axe d'articulation entre la verrière ouvrable (32) et le châssis de cabine (31) est un axe de rotation horizontal.

4. Véhicule selon l'une des revendications 1 à 3, dans lequel la commande de direction comprend un volant de direction solidaire d'une colonne de direction (102) couplée à un orbitrol (100) qui distribue l'huile via des conduites souples dans les chambres d'un vérin hydraulique à double tige de la direction, solidaire du châssis du véhicule, les conduites souples étant de longueur suffisante pour s'adapter au chargement d'élévation entre la cabine de pilotage (3) et le châssis (2) du véhicule.

5. Véhicule selon l'une des revendication 1 à 4, dans lequel le châssis présente une carrosserie, lesdits moyens d'élévation pour lever ladite cabine de pilotage par rapport audit châssis permettant de lever ladite cabine de pilotage (3) d'une position basse, pour laquelle ladite cabine de pilotage est intégrée à ladite carrosserie dudit châssis (2), prolongeant ladite carrosserie dudit châssis (2), vers une position haute, pour laquelle ladite cabine de pilotage (3) est à distance dudit châssis.

6. Véhicule selon l'une des revendications 1 à 5, dans lequel lesdits moyens d'élévation comprennent, d'une part, un support articulé (4) reliant la cabine de pilotage (3) audit châssis (2), et, d'autre part, un actionneur (5), tel qu'un vérin, coopérant avec ledit support articulé pour lever ou baisser ladite cabine de pilotage (3).

7. Véhicule selon la revendication 6, dans lequel ledit support articulé (4) forme un parallélogramme déformable dont les quatre sommets (6, 7, 8, 9) sont constitués par quatre axes de pivot, parallèles entre eux, deux sommets (6, 7) dudit parallélogramme déformable étant solidaires dudit châssis (2), lesdits deux autres sommets (8, 9) dudit parallélogramme déformable étant solidaires de la cabine de pilotage (3).

8. Véhicule selon l'une des revendications 1 à 7, dans lequel lesdits moyens d'élévation (4, 5) permettent de lever ladite cabine de pilotage (3) par rapport au châssis (2) d'une course verticale comprise entre 1 m et 2 m, telle que par exemple 1,6 m.

9. Véhicule selon l'une des revendications 1 à 8, dans lequel lesdits moyens d'élévation comprennent une commande accessible dans le volume habitable de ladite cabine de pilotage permettant à un opérateur humain d'actionner ladite cabine de pilotage à la montée ou à la descente.

10. Véhicule selon l'une des revendications 1 à 9, dans lequel lesdits moyens d'élévation comprennent des moyens électroniques autorisant l'élévation de ladite cabine de pilotage (3) si et seulement si une ou plusieurs conditions déterminées sont remplies.

11. Véhicule selon la revendication 10, dans lequel la ou les conditions déterminées sont tout ou partie des conditions suivantes :
- le poste de pilotage étant équipé d'une ceinture de sécurité, ladite ceinture est bouclée,
- la cabine de pilotage (3) étant équipée d'une verrière ouvrable, ladite verrière est en position fermée,
- le véhicule étant équipé d'une clef de contact, le contact est mis,
- le véhicule étant équipé d'un capteur de devers, le devers n'est pas supérieur à une valeur déterminée,
- le véhicule étant équipé d'un capteur de poids, le poids en charge de la cabine de pilotage (3) n'excède pas une valeur déterminée.

12. Véhicule selon l'une des revendications 1 à 11, dans lequel lesdits moyens d'élévation comprennent des moyens électroniques autorisant la descente de ladite cabine de pilotage (3) si et seulement si une ou plusieurs conditions déterminées sont remplies.

13. Véhicule selon la revendication 12, dans lequel la ou les conditions déterminées sont tout ou partie des conditions suivantes :
- le poste de pilotage étant équipé d'une ceinture de sécurité, ladite ceinture est bouclée,
- la cabine de pilotage étant équipée d'une verrière ouvrable, ladite verrière est en position fermée,
- le véhicule étant équipé d'une clef de contact, le contact est mis,
- le véhicule étant équipé dudit capteur de présence agencé pour détecter une présence entre ladite cabine de pilotage et ledit châssis lorsque ladite cabine de pilotage est en position haute, ledit capteur de présence ne détecte aucune présence.

## Patentansprüche

1. Fahrzeug (1), umfassend:
- ein Fahrgestell (2), das mit mindestens einer Vorderachse und einer Hinterachse versehen ist, wobei mindestens eine der Vorder- oder Hinterachsen, eine Lenkachse ist, wobei mindestens eine der Vorder- und/oder der Hinterachsen eine Antriebsachse ist,
- Antriebsmittel zum Fahren des Fahrzeugs,
- Bremsmittel zum Bremsen des Fahrzeugs,
- eine Fahrerkabine (3), deren Fahrgastzelle einen Leitstand aufnimmt sowie Steuerungsmittel, die in Bezug auf den Leitstand angebracht sind, wobei die Steuerungsmittel mindestens umfassen:
- eine Lenksteuerung (33), wie etwa ein Lenkrad, zur Steuerung der mindestens einen Lenkachse,
- eine Bremssteuerung, wie etwa ein Bremspedal, zur Steuerung der Bremsmittel,
- eine Gashebelsteuerung, wie etwa ein Gaspedal, zur Steuerung der Antriebsmittel,
- Hebemittel (4, 5), um die Fahrerkabine (3) in Bezug auf das
Fahrgestell (2) anzuheben,
**dadurch gekennzeichnet, dass** es mit einem Anwesenheitssensor versehen ist, um eine Anwesenheit zwischen der Fahrerkabine (3) und dem Fahrgestell (2) zu erfassen, und dadurch, dass der Anwesenheitssensor einen Fühler umfasst, ausgebildet durch die Unterseite (34) der Fahrerkabine, die mit dem Kabinenrahmen (31) mittels Verbindungsstangen (35) verbunden ist, und wobei die Unterseite (34) unter Einfluss der Schwerkraft und/oder durch einen mechanischen Schub eine vom Kabinenrahmen (31) entfernt beabstandete Position P1 einnimmt, wobei die Unterseite (34) befähigt ist, beim Treffen auf ein Hindernis nach oben in eine angenäherte Position P2 zu fahren, wobei es ein Schalter ermöglicht, die Positionsänderung der Unterseite (34) zu erfassen.

2. Fahrzeug nach Anspruch 1, wobei die Fahrerkabine (3) einen Kabinenrahmen (31) und ein öffenbares Kabinendach (32) umfasst, das beweglich mit dem Kabinenrahmen (31) verbunden ist, das befähigt ist, von einer geschlossenen Position der Fahrerkabine (3) in eine geöffnete Position der Fahrerkabine (3) überzugehen, wobei die Lenkanlage (33) mit dem öffenbaren Kabinendach (32) derart fest verbunden ist, dass sie zusammen mit dem Kabinendach (32) in geöffneter Position der Kabine (3) eingezogen wird.

3. Fahrzeug nach Anspruch 2, wobei die Gelenkachse zwischen dem öffenbaren Kabinendach (32) und dem Kabinenrahmen (31) eine horizontale Drehachse ist.

4. Fahrzeug nach einem der Ansprüche 1 bis 3, wobei die Lenksteuerung ein Lenkrad umfasst, das mit einer Lenksäule (102) fest verbunden ist, die an ein Lenkaggregat (100) gekoppelt ist, das das Öl über flexible Leitungen in die Kammern eines Hydraulikzylinders mit Doppellenkstange verteilt, der mit dem Fahrgestell des Fahrzeugs fest verbunden ist, wobei die flexiblen Leitungen eine Länge aufweisen, die ausreicht, um sich an die Höhenänderung zwischen der Fahrerkabine (3) und dem Fahrgestell (2) des Fahrzeugs anzupassen.

5. Fahrzeug nach einem der Ansprüche 1 bis 4, wobei das Fahrgestell eine Karosserie aufweist, wobei es die Hebemittel zum Anheben der Fahrerkabine in Bezug auf das Fahrgestell ermöglichen, die Fahrerkabine (3) von einer unteren Position, in der die Fahrerkabine in der Karosserie des Fahrgestells (2) integriert ist, anzuheben, indem sie die Karosserie des Fahrgestells (2) in eine hohe Position, in der die Fahrerkabine (3) von dem Fahrgestell beabstandet ist, verlängern.

6. Fahrzeug nach einem der Ansprüche 1 bis 5, wobei die Hebemittel einerseits einen beweglichen Träger (4), der die Fahrerkabine (3) mit dem Fahrgestell (2) verbindet, und andererseits ein Stellglied (5), wie etwa einen Zylinder, umfassen, der mit dem beweglichen Träger zusammenwirkt, um die Fahrerkabine (3) anzuheben oder abzusenken.

7. Fahrzeug nach Anspruch 6, wobei der bewegliche Träger (4) ein verformbares Parallelogramm bildet, dessen vier Ecken (6, 7, 8, 9) aus vier Schwenkachsen gebildet werden, die zueinander parallel sind, wobei zwei Ecken (6, 7) des verformbaren Parallelogramms fest mit dem Fahrgestell (2) verbunden sind, wobei die beiden anderen Ecken (8, 9) des verformbaren Parallelogramms fest mit der Fahrerkabine (3) verbunden sind.

8. Fahrzeug nach einem der Ansprüche 1 bis 7, wobei es die Hebemittel (4, 5) ermöglichen, die Fahrerkabine (3) in Bezug auf das Fahrgestell (2) in einem Vertikalhub im Bereich zwischen 1 m und 2 m, wie zum Beispiel 1,6 m, anzuheben.

9. Fahrzeug nach einem der Ansprüche 1 bis 8, wobei die Hebemittel eine Steuerung umfassen, die im Fahrgastraum der Fahrerkabine zugänglich ist, die es dem menschlichen Bediener ermöglicht, das Anheben oder das Absenken der Fahrerkabine auszulösen.

10. Fahrzeug nach einem der Ansprüche 1 bis 9, wobei die Hebemittel elektronische Mittel umfassen, die das Anheben der Fahrerkabine (3) erlauben, wenn und nur wenn eine oder mehrere festgelegte Bedingungen erfüllt sind.

11. Fahrzeug nach Anspruch 10, wobei die eine oder die mehreren festgelegten Bedingung(en) alle oder ein Teil der folgenden Bedingungen sind:
- wenn der Leitstand mit einem Sicherheitsgurt versehen ist, ist der Gurt angelegt,
- wenn die Fahrerkabine (3) mit einem öffenbaren Kabinendach versehen ist, befindet sich das Kabinendach in geschlossener Position,
- wenn das Fahrzeug mit einem Zündschlüssel ausgestattet ist, ist die Zündung eingeschaltet,
- wenn das Fahrzeug mit einem Neigungssensor versehen ist, ist die Neigung nicht größer als ein festgelegter Wert,
- wenn das Fahrzeug mit einem Gewichtssensor versehen ist, übersteigt das Ladegewicht der Fahrerkabine (3) einen festgelegten Wert nicht.

12. Fahrzeug nach einem der Ansprüche 1 bis 11, wobei die Hebemittel elektronische Mittel umfassen, die das Absenken der Fahrerkabine (3) erlauben, wenn und nur wenn eine oder mehrere festgelegte Bedingungen erfüllt sind.

13. Fahrzeug nach Anspruch 12, wobei die eine oder die mehreren festgelegten Bedingung(en) alle oder ein Teil der folgenden Bedingungen sind:
- wenn der Leitstand mit einem Sicherheitsgurt versehen ist, ist der Gurt angelegt,
- wenn die Fahrerkabine mit einem öffenbaren Kabinendach versehen ist, befindet sich das Kabinendach in geschlossener Position,
- wenn das Fahrzeug mit einem Zündschlüssel ausgestattet ist, ist die Zündung eingeschaltet,
- wenn das Fahrzeug mit einem Anwesenheitssensor versehen ist, der angebracht ist, um eine Anwesenheit zwischen der Fahrerkabine und dem Fahrgestell zu erfassen, wenn sich die Fahrerkabine in hoher Position befindet, erfasst der Anwesenheitssensor keine Anwesenheit.

## Claims

1. Vehicle (1) comprising:
- a chassis (2) equipped with at least one front axle and one rear axle, at least one of said axles, front or rear, being a steering axle, at least one of said axles, front or rear, being a driven axle,
- driving means for moving said vehicle,
- braking means for braking said vehicle,
- a control cabin (3) the passenger compartment of which receives a control station, as well as control means arranged with respect to said control station, said control means comprising at least:
- a steering control (33), such as a steering wheel, for controlling said at least one steering axle,
- a brake control, such as a brake pedal, for controlling the braking means,
- an accelerator control, such as an accelerator, for controlling said driving means,
- lifting means (4, 5) for lifting said control cabin (3) with respect to said chassis (2), **characterised in that** it is equipped with a presence sensor for detecting a presence between said control cabin (3) and said chassis (2), and **in that** said presence sensor comprises a detector formed by the underface (34) of the control cabin connected to the cabin chassis (31) by means of links (35), and wherein said underface (34) adopts, under the effect of gravity and/or a mechanical thrust, a separated position P1 distant from the cabin chassis (31), said underface (34) being able to rise to an approached position P2 when an obstacle is encountered, a contactor detecting the change in position of said underface (34).

2. Vehicle according to claim 1, wherein the control cabin (3) comprises a cabin chassis (31) and an openable glass window (32) articulated on said cabin chassis (31) able to pass from a position of closure of said control cabin (3) to a position of opening said control cabin (3), said steering control (33) being attached to said openable glass window (32) so as to retract conjointly with said openable glass window (32) in the open position of said cabin (3).

3. Vehicle according to claim 2, wherein the articulation axis between the openable glass window (32) and the cabin chassis (31) is a horizontal rotation axis.

4. Vehicle according to one of claims 1 to 3, wherein the steering control comprises a steering wheel secured to a steering column (102) coupled to an orbitrol (100) that distributes the oil via flexible conduits into the chambers of a double-rod hydraulic cylinder of the steering, secured to the vehicle chassis, the flexible conduits having sufficient length to adapt to the lifting charging between the control cabin (3) and the vehicle chassis (2).

5. Vehicle according to one of claims 1 to 4, wherein the chassis has bodywork, said lifting means for lifting said control cabin with respect to said chassis making it possible to lift said control cabin (3) from a low position wherein said control cabin is integrated in said bodywork of said chassis (2), extending said bodywork of said chassis (2), to a high position wherein said control cabin (3) is at a distance from said chassis.

6. Vehicle according to one of claims 1 to 5, wherein said lifting means comprise firstly an articulated support (4) connecting the control cabin (3) to said chassis (2), and secondly an actuator (5), such as a cylinder, cooperating with said articulated support in order to lift or lower said control cabin (3).

7. Vehicle according to claim 6, wherein said articulated support (4) forms a deformable parallelogram, the four vertices (6, 7, 8, 9) of which are formed by four pivot axes, parallel with each other, two vertices (6, 7) of said deformable parallelogram being fixed to said chassis (2), said other two vertices (8, 9) of said deformable parallelogram being fixed to the control cabin (3).

8. Vehicle according to one of claims 1 to 7, wherein said lifting means (4, 5) lift said control cabin (3) with respect to the chassis (2) by a vertical travel of between 1 m and 2 m, such as for example 1.6 m.

9. Vehicle according to one of claims 1 to 8, wherein said lifting means comprise a control accessible in the habitable space of said control cabin enabling a human operator to cause said control cabin to rise or fall.

10. Vehicle according to one of claims 1 to 9, wherein said lifting means comprise electronic means allowing the lifting of said control cabin (3) if and only if one or more given conditions are fulfilled.

11. Vehicle according to claim 10, wherein the given condition or conditions are all or some of the following conditions:
- the driving station being equipped with a safety belt, said belt is buckled,
- the control cabin (3) being equipped with an openable glass window, said glass window is in the closed position,
- the vehicle being equipped with an ignition key, contact is made,
- the vehicle being equipped with an inclination sensor, the inclination is not greater than a given value,
- the vehicle being equipped with a weight sensor, the weight loading the control cabin (3) does not exceed a given value.

12. Vehicle according to one of claims 1 to 11, wherein said lifting means comprise electronic means allowing lowering of said control cabin (3) if and only if one or more given conditions are fulfilled.

13. Vehicle according to claim 12, wherein the given condition or conditions are all or some of the following conditions:
- the driving station being equipped with a safety belt, said belt is buckled,
- the control cabin being equipped with an openable glass window, said glass window is in the closed position,
- the vehicle being equipped with an ignition key, contact is made,
- the vehicle being equipped with said presence sensor arranged to detect a presence between said control cabin and said chassis when said control cabin is in the high position, said presence sensor is not detecting any presence.
